# FASCICULE DE BREVET EUROPEEN

(11) **EP 1 118 624 B1**
(45) Date de publication et mention de la délivrance du brevet: **19.03.2008**
(21) Numéro de dépôt: 01200079.0
(22) Date de dépôt: 11.01.2001
(51) Int. Cl.: C08F 10/02, C08F 2/14, B01J 8/20, B01J 8/00, B01J 8/38

(54) **Procédé de fabrication de polymères d'oléfines**
Verfahren zur Herstellung von Olefinpolymeren
Process for the preparation of olefin polymers

(30) Priorité: 18.01.2000 BE 20000036
(43) Date de publication de la demande: 25.07.2001
(73) Titulaire: INEOS Manufacturing Belgium NV, 2040 Antwerpen (BE)
(72) Inventeur: Marissal, Daniel, 7090 Braine-le-Comte (BE); Walworth, Brent, 9050 Gentbrugge (BE)
(74) Mandataire: Smith, Julian Philip Howard

(56) Documents cités:
- EP-A- 0 432 555
- EP-A- 0 891 990
- GB-A- 850 002
- GB-A- 1 147 019
- US-A- 3 816 383
- US-A- 5 723 705

## Description

La présente invention concerne un procédé de fabrication de polymères d'oléfines en suspension dans un diluant. L'invention concerne également un dispositif permettant de réaliser le procédé.

La demande de brevet EP 0891990 décrit un procédé continu de polymérisation d'oléfines dans lequel une suspension comprenant jusqu'à 52 % en poids de particules de polyéthylène dans de l'isobutane est formée dans le réacteur de polymérisation et en est soutirée de manière continue. Ce procédé présente l'inconvénient que la suspension soutirée du réacteur contient encore une quantité importante de diluant et d'autres réactifs, tel que le monomère, qu'il faut alors séparer ultérieurement des particules de polymères et traiter en vue d'une réutilisation au réacteur.

Plusieurs techniques permettant de concentrer davantage une suspension de particules de polymères soutirée d'un réacteur de polymérisation ont été décrites. Industriellement, on utilise en général plusieurs jambes de décantation montées directement sur le réacteur de polymérisation et qui sont remplies et déchargées périodiquement de manière séquentielle. Ce procédé présente toutefois des inconvénients en ce que la décharge du réacteur de manière discontinue est délicate des points de vue sécurité et fiabilité. En effet, il est connu que les vannes isolant les jambes de décantation se bloquent facilement au cours du temps. Les brevets US 3,816,383 et GB 1147019 décrivent des procédés continus de polymérisation d'oléfines dans lesquels une suspension soutirée d'un réacteur comprenant des particules de polyéthylène est concentrée au moyen d'un hydrocyclone, puis une fraction de la suspension concentrée est prélevée en vue de la récupération du polyéthylène produit, l'autre fraction étant recyclée au réacteur. Ces procédés présentent l'inconvénient que la suspension prélevée contient des quantités relativement importantes de diluant et de monomère par rapport à la quantité de polymère produit, lesquelles devront être séparées et traitées ultérieurement.

La présente invention vise à procurer un procédé qui ne présente pas les inconvénients précités et qui permet en particulier de diminuer considérablement les quantités de diluant et d'autres réactifs à séparer des particules de polymère.

L'invention concerne dès lors un procédé de fabrication de polymères d'oléfines dans lequel :
(a) au moins une oléfine est polymérisée en continu dans un réacteur de polymérisation en présence d'un diluant (D) pour produire une suspension (S) comprenant ledit diluant et des particules de polymère d'oléfine,
(b) une partie de ladite suspension (S) est prélevée du réacteur,
(c) la suspension prélevée est diluée au moyen d'un liquide (L) de façon à obtenir une suspension diluée (SD),
(d) la suspension diluée (SD) est envoyée dans un hydrocyclone dans lequel sont formés et séparés, d'une part, une suspension concentrée en particules de polymère (SC) et, d'autre part, un flux (F) comprenant du diluant (D),
(e) le flux (F) est prélevé de l'hydrocyclone et recyclé au moins partiellement au réacteur de polymérisation,
(f) la suspension concentrée (SC) est prélevée de l'hydrocyclone, et
(g) les particules de polymère d'oléfine sont séparées de la suspension concentrée (SC).

Il a été constaté, de manière surprenante, que la dilution de la suspension (S) provenant du réacteur de polymérisation au moyen d'un liquide (L) permettait d'augmenter considérablement l'efficacité de l'hydrocyclone tout en permettant d'obtenir des suspensions très concentrées en particules de polymères à la sortie de l'hydrocyclone.

Dans la présente invention, on entend désigner par liquide (L), tout composé qui est liquide dans les conditions de pression et de température utilisées dans le réacteur de polymérisation et dans lequel la majeure partie de polymère d'oléfine formé est insoluble dans ces conditions de polymérisation.

Selon une première forme d'exécution du procédé selon l'invention, le liquide (L) ajouté, dans l'étape (c), à la suspension (S) prélevée du réacteur de polymérisation est constitué essentiellement de diluant (D). La quantité de diluant ajoutée en tant que liquide (L) dans cette première forme d'exécution du procédé peut varier dans des larges mesures. Généralement, la quantité de diluant ajoutée à la suspension est d'au moins 0,1l, de préférence d'au moins 0,5 l, par kg de particules de polymère présentes dans la suspension (S) prélevée du réacteur. La quantité de diluant ajoutée ne dépasse généralement pas 5 l, de préférence pas 3 l, par kg de particules de polymère présentes dans la suspension (S) prélevée du réacteur.

Cette première forme d'exécution du procédé présente l'avantage supplémentaire que la concentration en oléfine résiduaire dans la suspension concentrée (SC) prélevée en aval de l'hydrocyclone diminue fortement par rapport à sa teneur en particules de polymère et en diluant. De ce fait, l'épuration et la remise sous pression du diluant en vue de sa réutilisation au réacteur sont nettement simplifiées et plus économiques. De plus, la quantité d'oléfine à récupérer de la suspension concentrée est nettement diminuée et donc la récupération est également simplifiée et plus économique.

Selon une deuxième forme d'exécution du procédé selon l'invention, le liquide (L) ajouté, dans l'étape (c), à la suspension (S) prélevée du réacteur de polymérisation est constitué essentiellement d'une partie au moins du flux (F). Dans cette deuxième forme d'exécution du procédé selon l'invention, la quantité de flux (F) ajoutée à la suspension prélevée du réacteur pendant l'étape (c) peut varier dans des larges mesures. Généralement, la quantité de flux (F) ajoutée ainsi à la suspension est d'au moins 0,1l, de préférence d'au moins 1 l, par kg de particules de polymère présentes dans la suspension (S) prélevée du réacteur. La quantité de flux (F) ajoutée ne dépasse généralement pas 20 l, de préférence pas 10 l, par kg de particules de polymère présentes dans la suspension (S) prélevée du réacteur. La fraction de flux (F) utilisée comme liquide (L) est en général comprise entre 10 et 99 % en poids, le solde étant recyclé au réacteur de polymérisation. De préférence, la fraction de flux (F) utilisée comme liquide (L) est d'au moins 25 % en poids. De manière préférée, la fraction de flux (F) utilisée comme liquide (L) ne dépasse pas 95 % en poids.

Cette deuxième forme d'exécution du procédé présente l'avantage supplémentaire que l'efficacité de l'hydrocyclone peut être modulée en modifiant la fraction du flux (F) utilisée comme liquide (L). Effectivement, l'augmentation de la fraction du flux (F) recyclée comme liquide (L) permet une amélioration de l'efficacité de l'hydrocyclone. La diminution de la fraction du flux (F) recyclée comme liquide (L) réduit le pouvoir de séparation de l'hydrocyclone de sorte que certaines fines particules de polymère sont entraînées par le flux (F) et donc recyclées au réacteur de polymérisation, ce qui a pour effet d'augmenter la productivité du catalyseur. Un autre avantage de cette deuxième forme d'exécution du procédé réside dans le fait que la régulation de la quantité du flux (F) recyclée comme liquide (L) permet de régler la concentration en particules de polymère présentes dans le réacteur de polymérisation. Il est dès lors possible de travailler à des concentrations en polymère relativement faibles dans le réacteur de polymérisation tout en maintenant une concentration élevée en polymère à la sortie du procédé.

Selon une troisième forme d'exécution du procédé selon l'invention, le liquide (L) ajouté, dans l'étape (c), à la suspension (S) prélevée du réacteur de polymérisation est constitué essentiellement de diluant (D) et d'une partie au moins du flux (F). Dans cette troisième forme d'exécution du procédé selon l'invention, la quantité de flux (F) et la quantité de diluant (D) sont généralement celles décrites ci-avant, respectivement en rapport avec la première et la deuxième forme d'exécution du procédé.

L'oléfine mise en oeuvre dans l'étape de polymérisation (a) du procédé selon l'invention est généralement choisie parmi les oléfines comprenant de 2 à 12 atomes de carbone et leurs mélanges. L'oléfine est de préférence choisie parmi les 1-oléfines comprenant de 2 à 8 atomes de carbone, plus particulièrement parmi l'éthylène, le propylène, le 1-butène, le 1-méthylpentène, le 1-hexène, le 1-octène et leurs mélanges. Il va de soi que dans l'étape (a) plusieurs oléfines peuvent être mises en oeuvre ensemble ou que d'autres monomères copolymérisables avec les oléfines peuvent être mis en oeuvre de façon à obtenir des copolymères d'oléfines. Parmi les autres monomères copolymérisables avec les oléfines, on peut citer notamment les dioléfines conjuguées ou non. Le procédé selon l'invention est applicable à l'obtention de polymères d'oléfine. Par polymères d'oléfine on entend désigner aussi bien les homopolymères d'une oléfine que les copolymères d'une oléfine avec une ou plusieurs autres oléfines ou d'autres monomères copolymérisables avec l'oléfine. Le procédé est particulièrement bien adapté pour l'obtention de polymères d'éthylène et de propylène, et plus particulièrement pour l'obtention d'homopolymères d'éthylène et de copolymères d'éthylène comprenant moins de 5 % en poids d'au moins une autre oléfine comprenant de 3 à 8 atomes de carbone.

Le diluant (D) mis en oeuvre dans le procédé selon l'invention peut être tout diluant qui est liquide dans les conditions de polymérisation et dans lequel la majeure partie de polymère formé est insoluble dans les conditions de polymérisation. Des diluants appropriés sont les hydrocarbures. Les hydrocarbures aromatiques et aliphatiques cycliques comprenant de 5 à 12 atomes de carbone, tels que le toluène et le cyclohexane conviennent bien. Des diluants préférés sont les hydrocarbures aliphatiques acycliques comprenant de 3 à 8 atomes de carbone, tels que le pentane et l'hexane. Particulièrement préférés sont le propane et l'isobutane.

Selon un cas particulier, le diluant peut être l'oléfine elle-même maintenue à l'état liquide sous sa pression de saturation.

Selon un autre cas particulier, le diluant peut être maintenu sous son état supercritique.

La polymérisation effectuée à l'étape (a) du procédé selon l'invention s'effectue généralement en présence d'un catalyseur. Tout catalyseur permettant la polymérisation d'oléfines peut être utilisé. A titre d'exemples de tels catalyseurs, on peut citer les catalyseurs du type Ziegler, les catalyseurs à base de vanadium ou de chrome, les catalyseurs métallocènes et à base de métaux de transition des groupes 8 à 12 du Tableau Périodique des Eléments. Ces catalyseurs peuvent être supportés sur un support inorganique ou polymérique.

Il va de soi que dans l'étape de polymérisation (a), outre le(s) monomère(s) et le diluant, d'autres composés peuvent être présents, tels que notamment des cocatalyseurs, des agents de régulation de masse moléculaire.

La polymérisation effectuée dans l'étape (a) du procédé peut se faire dans des conditions de température et de pression très variables. Généralement, la polymérisation s'effectue à une température de 20 à 150 °C, de préférence de 25 à 130 °C. Habituellement, la polymérisation s'effectue à une pression de 10⁵ à 100.10⁵ Pa, de préférence de 10.10⁵ à 55.10⁵ Pa.

Selon une variante du procédé selon l'invention, la polymérisation effectuée à l'étape (a) s'effectue dans plusieurs réacteurs de polymérisation connectés en série. L'utilisation de plusieurs réacteurs en série est connue et a notamment été décrite dans la demande de brevet EP 0603935. Dans ce cas, la suspension (S) prélevée du dernier réacteur de polymérisation est envoyée à l'étape (b). Les suspensions issues de chaque réacteur précédant le dernier réacteur de polymérisation peuvent être prélevées et transférées au réacteur suivant de toute manière connue. A cet effet, il peut être avantageux d'utiliser également des hydrocyclones. Dans le cas où l'étape (a) s'effectue dans plusieurs réacteurs en série, le flux (F) peut être recyclé au dernier réacteur de polymérisation. Selon une forme d'exécution avantageuse, le flux (F) est recyclé à un réacteur de polymérisation précédant le dernier réacteur.

Dans l'étape (b) du procédé selon l'invention, une partie de la suspension formée dans le réacteur à l'étape (a), est prélevée de ce réacteur. La quantité de suspension prélevée du réacteur peut varier dans de larges mesures.

Généralement, la quantité de suspension prélevée du réacteur est réglée de façon à correspondre à la production en polymère.

Outre le diluant et les particules de polymère d'oléfine, la suspension prélevée du réacteur peut contenir d'autres composés présents ou formés dans le réacteur de polymérisation. Généralement, la suspension comprend une quantité d'oléfine non polymérisée.

Dans l'étape (b), la suspension est de préférence prélevée en continu du réacteur de polymérisation.

La suspension diluée (SD) formée dans l'étape (c) du procédé selon l'invention comprend, outre les constituants de la suspension prélevée du réacteur de polymérisation, le liquide (L).

Selon la première forme d'exécution du procédé selon l'invention, le liquide (L) est constitué essentiellement de diluant (D). Dans ce cas, le diluant ajouté en tant que liquide (L) peut être du diluant frais, n'ayant encore jamais servi pour la polymérisation ou du diluant récupéré et épuré. Par diluant récupéré et épuré, on entend désigner du diluant qui a déjà servi pour la polymérisation, mais qui est épuré afin d'en séparer la majeure partie des composés présents ou formés dans le réacteur de polymérisation, tels que les particules de polymère et l'oléfine, de façon à ce qu'il présente une pureté suffisante pour être réutilisé dans le procédé.

Selon la deuxième forme d'exécution du procédé, le liquide (L) est constitué essentiellement d'une partie au moins du flux (F). Le flux (F) comprend, outre le diluant, d'autres composés présents ou formés dans le réacteur de polymérisation. Généralement, le flux (F) comprend des composés présents ou formés dans le réacteur qui sont solubles dans le diluant. Le flux (F) comprend le plus souvent de l'oléfine. Le flux (F) peut également comprendre des composés présents ou formés dans le réacteur qui ne sont pas solubles dans le diluant, tels que par exemple de fines particules de polymère.

Selon la troisième forme d'exécution du procédé selon l'invention, le liquide (L) est constitué essentiellement de diluant (D) et d'une partie au moins du flux (F). Dans cette forme d'exécution du procédé, la suspension prélevée du réacteur est de préférence diluée d'abord au moyen de diluant (D), puis au moyen d'une partie du flux (F).

Dans l'étape (d) du procédé selon l'invention, la suspension diluée formée dans l'étape (c) est envoyée dans un hydrocyclone dans lequel sont formés et séparés, d'une part une suspension concentrée en particules de polymère (SC) et, d'autre part, un flux (F) comprenant du diluant (D).

Aux fins de la présente invention, on entend désigner par hydrocyclone tout appareil qui, sous l'action d'une force centrifuge, permet de séparer d'une suspension de particules solides, d'une part, un flux liquide appauvri en particules solides et, d'autre part, un flux concentré en particules solides. De tels appareils sont bien connus; ils ont notamment été décrits dans Perry's Chemical Engineers' Handbook, McGraw-Hill 7th Edition, 1997, pages 19-24 à 19-28. Il va de soi que dans le procédé selon l'invention plusieurs hydrocyclones peuvent être montés en série.

Les valeurs de pression et de température dans l'hydrocyclone sont généralement réglées de façon à ce que la majeure partie du diluant présent reste sous forme liquide. De préférence, la pression et la température sont de l'ordre de grandeur de celles régnant dans le réacteur de polymérisation.

Dans l'étape (e) du procédé selon l'invention, le flux (F) est prélevé de l'hydrocyclone et recyclé au moins partiellement au réacteur de polymérisation. Dans la première forme d'exécution du procédé selon l'invention, généralement, la totalité du flux (F) est recyclée au réacteur. Dans les deuxième et troisième formes d'exécution du procédé, au moins une partie du flux (F) est utilisée en tant que liquide (L) dans l'étape (c) du procédé. Dans ce cas, le solde du flux (F) est généralement recyclé au réacteur.

Dans l'étape (f) du procédé selon l'invention, la suspension concentrée (SC) est prélevée de l'hydrocyclone. La suspension concentrée prélevée de l'hydrocyclone comprend des particules de polymère et du diluant.

Dans l'étape (g) du procédé selon l'invention, les particules de polymère d'oléfine sont séparées de la suspension concentrée (SC). Cette séparation peut se faire par toute méthode connue. Les particules de polymère sont généralement séparées de la majeure partie du diluant en soumettant la suspension concentrée (SC) issue de l'étape (f) du procédé selon l'invention à un traitement sous des conditions de pression et de température aptes à vaporiser au moins une partie du diluant. Les particules de polymère ne contenant plus qu'une faible quantité de diluant résiduaire peuvent ensuite être séchées par tout moyen connu, par exemple par chauffage dans un sécheur.

Selon une première variante de l'étape (g) du procédé selon l'invention, la suspension concentrée (SC) est soumise à une détente à une pression inférieure à 5.10⁵ Pa. Le diluant vaporisé peut ensuite être recondensé par compression en vue de sa réutilisation dans le procédé selon l'invention. Avant sa réutilisation, le diluant est habituellement soumis à une épuration de façon à enlever la majeure partie d'oléfine et éventuellement les autres composés présents. Après épuration, le diluant peut être réutilisé aux étapes (a) et/ou (c) du procédé selon l'invention.

Selon une deuxième variante de l'étape (g) du procédé selon l'invention, la suspension concentrée (SC) est soumise à une détente sous des conditions de température et de pression qui assurent la vaporisation de la majeure partie du diluant, mais qui sont telles que le refroidissement ultérieur du diluant vaporisé à une température inférieure ou égale à 60 °C permet sa recondensation sans devoir le comprimer. La température à laquelle est effectuée la détente est généralement comprise entre 50 et 90 °C. Afin de régler la température à laquelle est effectuée la détente, il peut être avantageux de chauffer la suspension concentrée issue de l'hydrocyclone au moyen d'un chauffage en ligne. La pression à laquelle est effectuée la détente est généralement comprise entre 5.10⁵ et 20.10⁵ Pa. Cette variante du procédé présente l'avantage que le diluant ainsi séparé des particules de polymère peut être recondensé par simple refroidissement sans étape de compression et être réutilisé à l'étape (a) du procédé selon l'invention. Cette deuxième variante de l'étape (g) du procédé est très avantageuse quand on utilise un diluant qui présente une température d'ébullition sous pression atmosphérique qui est inférieure à environ 25 °C.

Le procédé selon l'invention présente en outre l'avantage qu'il permet d'obtenir des polymères ayant une distribution plus étroite de la taille de leurs particules, ainsi qu'une homogénéité accrue de leurs propriétés rhéologiques.

L'invention concerne également un dispositif permettant de réaliser le procédé décrit ci-dessus, comprenant un réacteur de polymérisation fonctionnant en continu, un dispositif permettant l'ajout du liquide (L), un hydrocyclone, un dispositif de prélèvement de la suspension concentrée (SC), un circuit de recyclage du flux (F) au réacteur, un dispositif permettant la séparation des particules de polymère d'oléfine de la suspension concentrée (SC).

Comme réacteur de polymérisation, on peut utiliser tout réacteur fonctionnant en continu, tels que des réacteurs de type cuve agitée ou des réacteurs de type boucle. De bons résultats ont été obtenus avec des réacteurs boucles.

Dans le procédé selon l'invention, le flux (F) peut être prélevé de l'hydrocyclone et recyclé au réacteur en bénéficiant d'une différence de pression régnant dans le réacteur de polymérisation. Plus particulièrement, quand le réacteur de polymérisation est un réacteur du type boucle, la suspension (S) peut être prélevée du réacteur et le flux (F) peut être recyclé au réacteur en bénéficiant de la différence de pression régnant en aval et en amont du système d'agitation du réacteur boucle. Il est toutefois préféré de prélever le flux (F) de l'hydrocyclone en créant une différence de pression en amont et en aval de l'hydrocyclone au moyen d'une pompe de circulation. La pompe est de préférence montée sur le circuit de recyclage du flux (F) au réacteur.

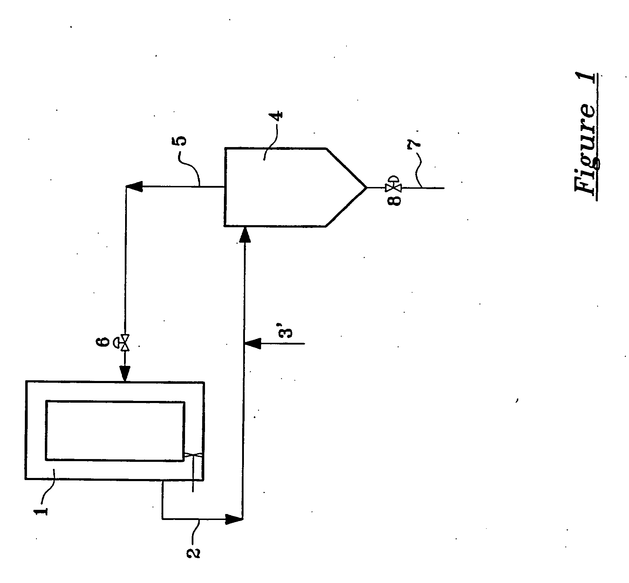

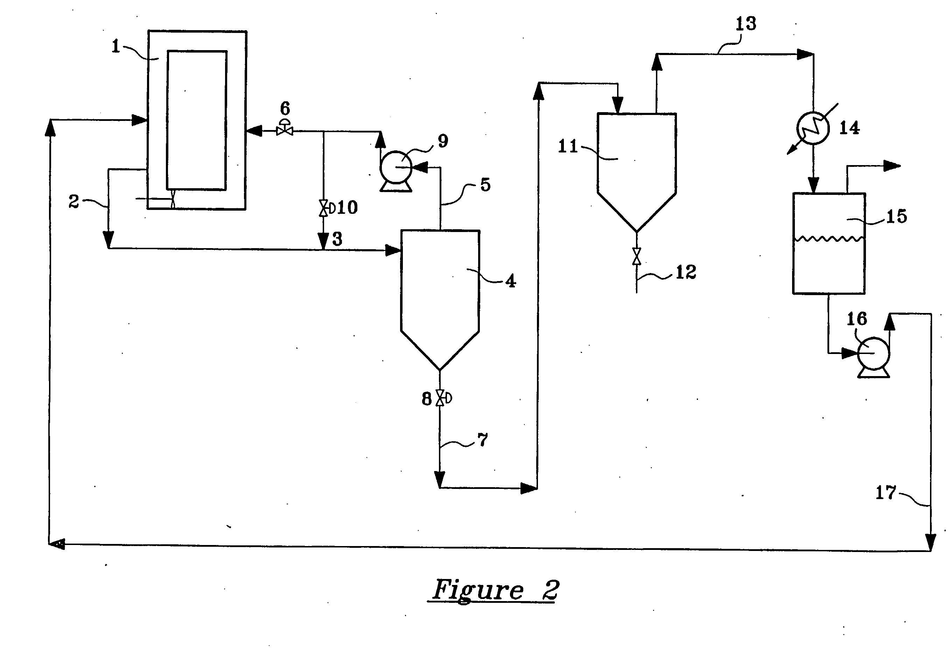

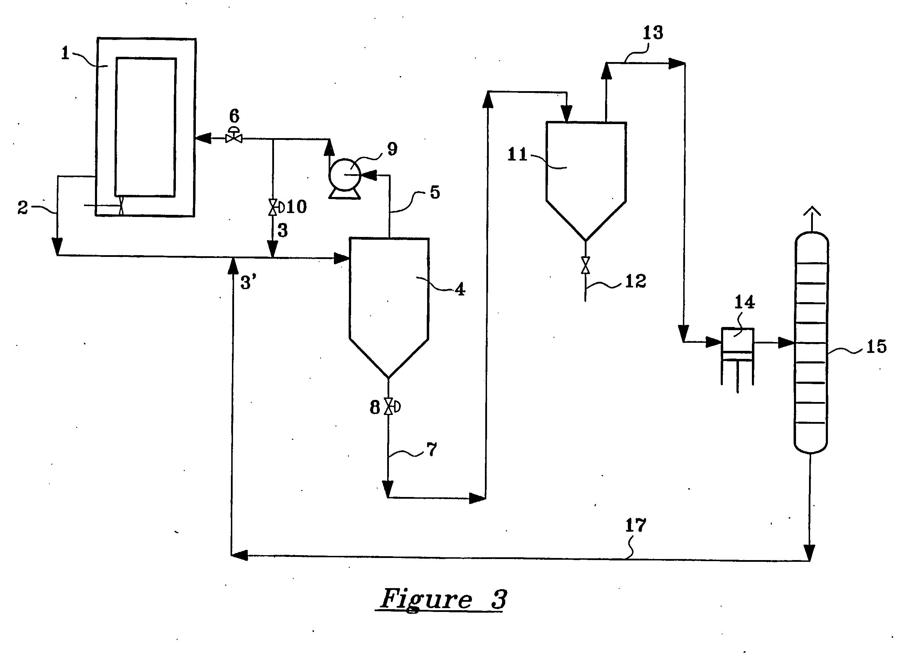

Les figures 1 à 3 montrent schématiquement des formes d'exécution du dispositif utilisable pour la réalisation du procédé selon l'invention. La figure 1 illustre schématiquement la première forme d'exécution du procédé selon l'invention. La figure 2 illustre schématiquement la deuxième forme d'exécution du procédé et la figure 3, la troisième forme d'exécution du procédé selon l'invention.

Dans les schémas des figures 1 à 3, une partie de la suspension comprenant des particules de polymère et du diluant formée dans le réacteur de polymérisation 1 est prélevée par la tubulure 2.

Dans le schéma de la figure 1, du diluant est ajouté par la tubulure 3' et la suspension diluée est envoyée dans l'hydrocyclone 4 dans lequel sont formés, d'une part, une suspension concentrée en particules de polymère qui est prélevée de l'hydrocyclone 4 par la vanne 8 montée sur la tubulure 7, et d'autre part un flux (F) enrichi en diluant. Ce flux (F) enrichi en diluant est prélevé de l'hydrocyclone 4 par la tubulure 5 et recyclé au réacteur de polymérisation. L'ouverture de la vanne de réglage 6 montée sur la tubulure 5 permet de conditionner le degré d'épaississement de la suspension concentrée. La régulation de la quantité du flux (F) recyclée au réacteur permet de régler la concentration en particules de polymère présentes dans le réacteur de polymérisation. Il est dès lors possible de travailler à des concentrations en polymère relativement faibles dans le réacteur de polymérisation tout en maintenant une concentration élevée en polymère à la sortie du procédé.

Dans la figure 1, on n'a pas représenté la séparation des particules de polymère de la suspension concentrée prélevée par la vanne 8 montée sur la tubulure 7.

Dans le schéma de la figure 2, la suspension prélevée du réacteur de polymérisation 1 est envoyée à l'hydrocyclone 4 au moyen d'une pompe 9 montée sur la tubulure 5 sortant de l'hydrocyclone 4. La suspension prélevée du réacteur 1 est diluée par la conduite 3 au moyen d'une partie au moins du flux (F) enrichi en diluant sortant de l'hydrocyclone par la tubulure 5. Les ouvertures des vannes de réglage 6 et 10 permettent de régler les proportions respectives de flux (F) recyclées au réacteur et utilisées pour la dilution de la suspension prélevée du réacteur. Elles permettent également de régler la proportion de fines dans le flux (F).

La suspension concentrée prélevée de l'hydrocyclone via la tubulure 7 est envoyée dans une cuve 11 maintenue sous une pression inférieure à celle régnant dans l'hydrocyclone (généralement de l'ordre de 5.10⁵ à 15.10⁵ Pa) de façon à y vaporiser la majeure partie du diluant. A cet effet, la tubulure 7 peut éventuellement être munie d'un dispositif de chauffage de conduite. Le diluant vaporisé est ensuite envoyé par la conduite 13 munie d'un échangeur de chaleur à une cuve 15 de façon à le condenser par simple refroidissement. Le diluant condensé est ensuite envoyé via la pompe 16 et la conduite 17 au réacteur 1 en tant que diluant dans le réacteur de polymérisation 1. Les particules de polymère sont prélevées par la tubulure 12.

Dans le schéma de la figure 3, la suspension prélevée du réacteur de polymérisation 1 est envoyée à l'hydrocyclone 4 au moyen d'une pompe 9 montée sur la tubulure 5 sortant de l'hydrocyclone 4. La suspension prélevée du réacteur 1 est diluée au moyen de diluant par la conduite 3' et, par la conduite 3, au moyen d'une partie au moins du flux (F) enrichi en diluant sortant de l'hydrocyclone par la tubulure 5. Les ouvertures des vannes de réglage 6 et 10 permettent de régler les proportions respectives de flux (F) recyclées au réacteur et utilisées pour la dilution de la suspension prélevée du réacteur. Elles permettent également de régler la proportion de fines dans le flux (F).

La suspension concentrée prélevée de l'hydrocyclone via la tubulure 7 est envoyée dans une cuve 11 maintenue sous une pression inférieure à celle régnant dans l'hydrocyclone (généralement inférieure à 5.10⁵ Pa) de façon à y vaporiser la majeure partie du diluant. Le diluant vaporisé est ensuite envoyé par la conduite 13 à un compresseur 14 de façon à le condenser par compression. Le diluant ainsi condensé est ensuite envoyé à une colonne de distillation 15 de façon à y enlever le monomère. Le diluant appauvri en monomère est ensuite réutilisé en tant que diluant via les tubulures 17 et 3'. Les particules de polymère sont prélevées par la tubulure 12.

### Exemple 1

Un essai de polymérisation a été effectué avec le procédé selon l'invention et dans le dispositif décrit à la figure 1. De l'éthylène a été polymérisé en continu dans un réacteur boucle 1 chargé d'isobutane au moyen d'un catalyseur au chrome supporté sur de la silice de façon à former une suspension comprenant de l'ordre de 50 % en poids de particules de polyéthylène. La température dans le réacteur était de l'ordre de 100 °C ; la pression était de l'ordre de 40.10⁵ Pa. Le réacteur a été alimenté en continu en éthylène à un débit de 10 tonnes/h. Une partie de la suspension de particules de polymère formée dans le réacteur a été prélevée en continu du réacteur 1 par la tubulure 2 à un débit de 20 tonnes/h. Cette suspension prélevée a été diluée en continu avec de l'isobutane ajouté via la tubulure 3' à un débit de 7 tonnes/h. La suspension ainsi diluée comprenait environ 37 % en poids de particules de polymère. Elle a été envoyée en continu dans un hydrocyclone 4. Le fonctionnement de l'hydrocyclone a été réglé au moyen des vannes de réglage 6 et 8 de façon à obtenir un flux (F) sortant de l'hydrocyclone par la tubulure 5 à un débit de 10 tonnes/h et une suspension concentrée sortant de l'hydrocyclone par la tubulure 7 à un débit de 17 tonnes/h. Le flux (F) a été recyclé intégralement au réacteur de polymérisation 1; il comprenait essentiellement de l'isobutane. La suspension concentrée comprenait 59 % en poids de particules de polymère et une teneur en éthylène de 6 % volume. Pour une production horaire de 10 tonnes de polyéthylène, les quantités d'isobutane et d'éthylène à séparer des particules de polymère et à traiter afin de leur réutilisation étaient, respectivement, d'environ 6,6 tonnes/heure et 0,2 tonne/heure.

### Exemple 2 (non conforme à l'invention)

Le procédé décrit dans l'exemple 1 a été reproduit sauf que la suspension prélevée du réacteur de polymérisation n'a pas été diluée au moyen d'isobutane. La suspension prélevée du réacteur de polymérisation 1 comprenant environ 50 % en poids de particules de polymère a été envoyée directement dans l'hydrocyclone 4. Le fonctionnement de l'hydrocyclone a été réglé au moyen des vannes de réglage 6 et 8 de façon à obtenir une suspension concentrée sortant de l'hydrocyclone par la tubulure 7 à un débit de 17 tonnes/h comprenant 59 % en poids de particules de polymère. Le flux (F) sortant de l'hydrocyclone par la tubulure 5 à un débit de 3 tonnes/h, a été recyclé intégralement au réacteur de polymérisation 1 ; il comprenait essentiellement de l'isobutane. La suspension concentrée comprenait une teneur en éthylène de 10 % volume. Pour une production horaire de 10 tonnes de polyéthylène, les quantités d'isobutane et d'éthylène à séparer et à traiter afin de leur réutilisation étaient, respectivement, d'environ 6,6 tonnes/heure et 0,33 tonne/heure.

La comparaison des exemples 1 et 2 montre que le procédé selon l'invention permet d'obtenir une suspension concentrée en particules de polymère ayant une teneur fortement réduite en éthylène. De cette façon la quantité d'éthylène à séparer ultérieurement des particules de polymère et du diluant est fortement réduite.

### Exemple 3 (non conforme à l'invention)

Le procédé décrit dans l'exemple 1 a été reproduit sauf que le passage dans un hydrocyclone a été omis.

La suspension prélevée du réacteur de polymérisation comprenait environ 50 % en poids de particules de polymère. Pour une production horaire de 10 tonnes de polyéthylène, les quantités d'isobutane et d'éthylène à recycler étaient, respectivement, d'environ 10 tonnes/heure et 0,5 tonne/heure.

### Exemple 4 (non conforme à l'invention)

Le procédé décrit dans l'exemple 1 a été reproduit sauf que la suspension a été prélevée du réacteur de polymérisation au moyen de jambes de décantation et que l'hydrocyclone a été omis. La suspension ainsi prélevée du réacteur comprenait environ 55 % en poids de particules de polymère. Pour une productivité en particules de polymère de 10 tonnes/h, les quantités d'isobutane et d'éthylène à recycler étaient, respectivement, de 8,2 tonnes/h et de 0,4 tonnes/heures

La comparaison des exemples 1, 3 et 4 montre que, pour une même productivité horaire en polymère, le procédé selon l'invention permet de diminuer considérablement les quantités de diluant et d'oléfine à séparer des particules de polymère et à traiter en vue de leur réutilisation dans le procédé.

## Revendications

1. - Procédé de fabrication de polymères d'oléfine dans lequel :
(a) au moins une oléfine est polymérisée en continu dans un réacteur de polymérisation en présence d'un diluant (D) pour produire une suspension (S) comprenant ledit diluant (D) et des particules de polymère d'oléfine,
(b) une partie de la suspension (S) est prélevée du réacteur,
(c) la suspension prélevée est diluée au moyen d'un liquide (L) de façon à obtenir une suspension diluée (SD),
(d) la suspension diluée (SD) est envoyée dans un hydrocyclone dans lequel sont formés et séparés, d'une part, une suspension concentrée en particules de polymère (SC) et, d'autre part, un flux (F) comprenant du diluant (D),
(e) le flux (F) est prélevé de l'hydrocyclone et recyclé au moins partiellement au réacteur de polymérisation,
(f) la suspension concentrée (SC) est prélevée de l'hydrocyclone, et
(g) les particules de polymère d'oléfine sont séparées de la suspension concentrée (SC).

2. - Procédé selon la revendication 1, **caractérisé en ce que** le liquide (L) ajouté dans l'étape (c) est constitué essentiellement de diluant (D).

3. .- Procédé selon la revendication 1, **caractérisé en ce que** le liquide (L) ajouté dans l'étape (c) est constitué essentiellement d'une partie au moins du flux (F).

4. - Procédé selon la revendication 1, **caractérisé en ce que** le liquide (L) ajouté dans l'étape (c) est constitué essentiellement de diluant (D) et d'une partie au moins du flux (F).

5. .- Procédé selon l'une quelconque des revendications 1 à 4, **caractérisé en ce que** le diluant (D) est un hydrocarbure aliphatique acyclique comprenant de 3 à 8 atomes de carbone.

6. - Procédé selon la revendication 5, **caractérisé en ce que** le diluant (D) est de l'isobutane ou du propane.

7. - Procédé selon l'une quelconque des revendications 1 à 6, **caractérisé en ce que**, dans l'étape (g), la suspension concentrée (SC) est soumise à un traitement dans des conditions de pression et de température qui assurent la vaporisation d'au moins une partie du diluant (D).

8. .- Procédé selon la revendication 7, **caractérisé en ce que** le diluant (D) est vaporisé dans des conditions de pression et de température telles que le refroidissement ultérieur du diluant à une température inférieure ou égale à 60 °C permet sa recondensation sans compression.

9. - Procédé selon l'une quelconque des revendications 1 à 8, **caractérisé en ce que** le procédé est appliqué à l'obtention de polymères d'éthylène.

10. - Dispositif pour l'exécution du procédé selon l'une quelconque des revendications 1 à 9, comprenant un réacteur de polymérisation fonctionnant en continu, un dispositif permettant l'ajout de liquide (L), un hydrocyclone, un dispositif de prélèvement de la suspension concentrée (SC), un circuit de recyclage du flux (F) au réacteur, un dispositif permettant la séparation des particules de polymère d'oléfine de la suspension concentrée (SC).

11. - Dispositif selon la revendication 10, comprenant une pompe de circulation montée sur le circuit de recyclage du flux (F) au réacteur.

## Claims

1. - Process for the preparation of olefin polymers in which:
(a) At least one olefin is continuously polymerised in a polymerisation reactor in the presence of a diluting agent (D) in order to produce a suspension (S) comprising the said diluting agent (D) and olefin polymer particles,
(b) a part of the suspension (S) is tapped from the reactor,
(c) the tapped suspension is diluted by means of a liquid (L) in such a way as to obtain a diluted suspension (SD),
(d) the diluted suspension (SD) is conveyed into a hydrocyclone in which are formed and separated, on the one hand, a concentrated suspension of polymer particles (SC), and, on the other, a flow (F) comprising the diluting agent (D),
(e) the flow (F) is tapped from the hydrocyclone and recycled at least in part to the polymerisation reactor,
(f) the concentrated suspension (SC) is tapped from the hydrocyclone, and
(g) the olefin polymer particles are separated from the concentrated suspension (SC).

2. - Process according to Claim 1, **characterised in that** the liquid (L) added in step (c) consists essentially of the diluting agent (D).

3. - Process according to Claim 1, **characterised in that** the liquid (L) added in step (c) consists essentially of at least a part of the flow (F).

4. - Process according to Claim 1, **characterised in that** the liquid (L) added in step (c) consists essentially of the diluting agent (D) and at least a part of the flow (F).

5. - Process according to any of Claims 1 to 4, **characterised in that** the diluting agent (D) is an aliphatic acyclic hydrocarbon comprising 3 to 8 carbon atoms.

6. - Process according to Claim 5, **characterised in that** the diluting agent (D) is isobutane or propane.

7. - Process according to any of Claims 1 to 6, **characterised in that**, in step (g), the concentrated solution (SC) is subjected to a treatment under pressure and temperature conditions which assure the vaporisation of at least a part of the diluting agent (D).

8. - Process according to Claim 7, **characterised in that** the diluting agent (D) is vaporised under pressure and temperature conditions such that the subsequent cooling of the diluting agent to a temperature of less than or equal to 60 °C allows for its recondensation without compression.

9. - Process according to any of Claims 1 to 8, **characterised in that** the process is applied to the obtaining of ethylene polymers.

10. - Device for the performance of the process according to any of Claims 1 to 9, comprising a polymerisation reactor in continuous function, a device allowing for the addition of liquid (L), a hydrocyclone, a device for tapping the concentrated suspension (SC), a circuit for recycling the flow (F) to the reactor, and a device allowing for the separation of the olefin polymer particles from the concentrated suspension (SC).

11. - Device according to Claim 10, comprising a circulation pump installed on the circuit for recycling the flow (F) to the reactor.

## Patentansprüche

1. Verfahren zur Herstellung von Olefinpolymeren, wobei:
(a) mindestens ein Olefin in einem Polymerisationsreaktor in Gegenwart eines Verdünnungsmittels (D) kontinuierlich polymerisiert wird, um eine Suspension (S) herzustellen, die das Verdünnungsmittel (D) und Olefinpolymerpartikel umfasst,
(b) ein Teil der Suspension (S) aus dem Reaktor entnommen wird,
(c) die entnommene Suspension mithilfe einer Flüssigkeit (L) verdünnt wird, so dass eine verdünnte Suspension (SD) erhalten wird,
(d) die verdünnte Suspension (SD) in einen Hydrozyklon geleitet wird, in dem einerseits eine Suspension (SC), in der Polymerpartikel aufkonzentriert sind, und andererseits ein Strom (F), der das Verdünnungsmittel (D) umfasst, gebildet und getrennt werden,
(e) der Strom (F) aus dem Hydrozyklon entnommen und mindestens teilweise zum Polymerisationsreaktor rezykliert wird,
(f) die konzentrierte Suspension (SC) aus dem Hydrozyklon entnommen wird und
(g) die Olefinpolymerpartikel aus der konzentrierten Suspension (SC) abgetrennt werden.

2. Verfahren nach Anspruch 1, **dadurch gekennzeichnet, dass** die Flüssigkeit (L), die im Schritt (c) zugegeben wird, im Wesentlichen aus Verdünnungsmittel (D) besteht.

3. Verfahren nach Anspruch 1, **dadurch gekennzeichnet, dass** die Flüssigkeit (L), die im Schritt (c) zugegeben wird, im Wesentlichen aus mindestens einem Teil des Stromes (F) besteht.

4. Verfahren nach Anspruch 1, **dadurch gekennzeichnet, dass** die Flüssigkeit (L), die im Schritt (c) zugegeben wird, im Wesentlichen aus Verdünnungsmittel (D) und mindestens einem Teil des Stromes (F) besteht.

5. Verfahren nach einem der Ansprüche 1 bis 4,
**dadurch gekennzeichnet, dass** das Verdünnungsmittel (D) ein azyklischer aliphatischer Kohlenwasserstoff ist, der 3 bis 8 Kohlenstoffatome umfasst.

6. Verfahren nach Anspruch 5, **dadurch gekennzeichnet, dass** das Verdünnungsmittel (D) Isobutan oder Propan ist.

7. Verfahren nach einem der Ansprüche 1 bis 6,
**dadurch gekennzeichnet, dass** im Schritt (g) die konzentrierte Suspension (SC) einer Behandlung unter Druck- und Temperaturbedingungen unterzogen wird, die das Verdampfen mindestens eines Teils des Verdünnungsmittels (D) sicherstellen.

8. Verfahren nach Anspruch 7, **dadurch gekennzeichnet, dass** das Verdünnungsmittel (D) unter derartigen Druck- und Temperaturbedingungen verdampft wird, dass das Verdünnungsmittel durch abschließendes Abkühlen auf eine Temperatur von weniger als oder gleich 60°C ohne Kompression rekondensiert werden kann.

9. Verfahren nach einem der Ansprüche 1 bis 8,
**dadurch gekennzeichnet, dass** das Verfahren auf die Gewinnung von Ethylenpolymeren angewendet wird.

10. Vorrichtung zum Durchführen des Verfahrens nach einem der Ansprüche 1 bis 9, umfassend einen kontinuierlich arbeitenden Polymerisationsreaktor, eine Vorrichtung, welche die Zugabe von Flüssigkeit (L) gestattet, einen Hydrozyklon, eine Vorrichtung zum Entnehmen der konzentrierten Suspension (SC), einen Rezyklierungskreislauf für den Strom (F) zum Reaktor und eine Vorrichtung, welche die Abtrennung von Olefinpolymerpartikeln aus der konzentrierten Suspension (SC) gestattet.

11. Vorrichtung nach Anspruch 10, umfassend eine Kreislaufpumpe, die an dem Rezyklierungskreislauf für den Strom (F) zum Reaktor angebracht ist.
